# EUROPÄISCHE PATENTSCHRIFT

(11) **EP 1 336 070 B1**
(45) Veröffentlichungstag und Bekanntmachung des Hinweises auf die Patenterteilung: **08.06.2005**
(21) Anmeldenummer: 01997668.7
(22) Anmeldetag: 21.11.2001
(51) Int. Cl.: F25B 43/00, F25B 13/00, B04C 9/00, B01D 45/12

(54) **SAMMLER FÜR DIE FLÜSSIGE PHASE DES ARBEITSMEDIUMS EINER KLIMAANLAGE**
COLLECTOR FOR THE LIQUID PHASE OF A WORKING MEDIUM OF AN AIR CONDITIONING SYSTEM
COLLECTEUR DE PHASE LIQUIDE DU MILIEU DE TRAVAIL D'UN SYSTEME DE CLIMATISATION

(30) Priorität: 24.11.2000 DE 10058513
(43) Veröffentlichungstag der Anmeldung: 20.08.2003
(73) Patentinhaber: DaimlerChrysler AG, 70567 Stuttgart (DE); Obrist Engineering GmbH, 6890 Lustenau (AT)
(72) Erfinder: KUHN, Peter, 69469 Weinheim (DE); OBRIST, Frank, A-6850 Dornbirn (AT)
(86) Internationale Anmeldenummer: PCT/EP2001/013510
(87) Internationale Veröffentlichungsnummer: WO 2002/042697

(56) Entgegenhaltungen:
- EP-A- 0 887 603
- US-A- 3 411 319
- US-A- 4 506 523
- US-A- 5 347 817
- US-A- 5 551 255

## Beschreibung

Die Erfindung betrifft einen Sammler für die flüssige Phase des Arbeitsmediums einer Klimaanlage, mit einem ersten und zweiten, für die Einbindung in den Kreislauf der Klimaanlage vorgesehenen Anschlussstutzen und mit einem an den zweiten Anschlussstutzen angeschlossenen Leitrohr, das durch den Innenraum des Behälters geführt ist, so dass ein Teil des Leitrohres durch den Bodenbereich des für die vertikale Anordnung vorgesehenen Behälters verläuft und sich sein offenes Ende im oberen Bereich des Behälters befindet, wobei der durch den Bodenbereich verlaufende Teil des Leitrohres mindestens eine Öffnung hat, zur Rückführung von gesammeltem Öl und flüssiger Phase des Arbeitsmediums in das durch die Klimaanlage zirkulierende Arbeitsmedium aufweist.

Ein Sammler dieser Art ist bekannt durch die DE 19842019 A1. Dieser Sammler hat den Nachteil, dass er für eine Klimaanlage mit wahlweisem Wärmepumpenbetrieb nicht geeignet ist, indem er bei der dann erforderlichen Umkehr der Strömungsrichtung eine Rückführung von gesammeltem Öl in den Kreislauf der Klimaanlage verhindert. Dies ergibt sich dadurch, dass aus dem Leitrohr in den Behälter hinein ausströmendes Medium seinen Ölanteil im Behälter wieder ausscheidet, bevor es vom Abströmstutzen aufgenommen werden kann. Die somit mögliche Anreicherung von Öl im Sammler bringt die Gefahr mit sich, dass der Kompressor der Klimaanlage durch Ölmangel ausfällt.

Aus der DE 2650935 C3 ist ein Fliehkraftabscheider für eine Kältemaschine bekannt mit einem mehrteiligen, vertikal orientierten Gehäuse, in dem von oben nach unten zunächst ein zylindrischer, dann ein konischer Abscheideraum und schließlich ein Flüssigkeitssammelraum angeordnet sind. In den zylinderischen Abscheideraum münden tangential ein Eintrittsstutzen und in Richtung der vertikalen Achse ein Tauchrohr, welches in einen Sauggaskanal übergeht. Es erfolgt eine Reinigung von Kältemittel, durch ein Abscheiden von Flüssigkeit und Partikeln entlang eines bestimmten Strömungsweges. Eine Umkehrung der Strömungsrichtung ist weder vorgesehen noch möglich.

Der Erfindung liegt die Aufgabe zugrunde, einen Sammler zu finden, der einen Austrag von Öl aus der flüssigen Phase auch bei umgekehrter Richtung der Behälterdurchströmung gewährleistet und der ausserdem eine verbesserte Trennwirkung zur Abscheidung der flüssigen Phase des Mediums aufweist.

Die Lösung der genannten Aufgabe erfolgt erfindungsgemäss durch eine Vorrichtung mit den Merkmalen des Anspruchs 1. Zur Abscheidung der flüssigen Phase ist dabei eine zyklonartige Trenneinrichtung mit einer Zyklonkammer und mit einem zentralen, einen Überlauf bildenden Abflussstutzen vorgesehen ist, in die einer der Anschlussstutzen tangential mündet, wobei das offene Ende des Leitrohres mit Abstand gleichachsig vor diesem Abflussstutzen endet, so dass bei umgekehrter Durchströmung des Sammlers vom zweiten Anschlussstutzen über das Leitrohr zur Zyklonkammer flüssige Phase und Öl über das Loch und den tangentialen Anschlussstutzen aus dem Sammler austreibbar ist.

Im Folgenden wird die Erfindung an Hand von zwei in den Zeichnungen dargestellten Ausführungsbeispielen näher erläutert. Es zeigt:
- Fig.1: einen Axialschnitt durch einen Sammler mit ungekrümmtem Leitrohr,
- Fig.2: einen Radialschnitt entlang der Linie II-II der Fig. 1,
- Fig.3: einen Axialschnitt durch einen Sammler mit gekrümmtem Leitrohr entlang der Linie III-III der Fig. 4,
- Fig.4: einen Radialschnitt entlang der Linie IV-IV der Fig. 3,
- Fig.5: einen Axialschnitt durch einen Sammler entsprechend einem dritten Ausführungsbeispiel der Erfindung und
- Fig.6: einen Radialschnitt durch den Sammler nach Fig. 5.

Der Sammler 1 für die flüssige Phase 2 des Arbeitsmediums einer Klimaanlage hat einen länglichen, zylindrischen, für die vertikale Anordnung, vorzugsweise im Motorraum eines Fahrzeuges, vorgesehenen Behälter 3, an dem ein erster und zweiter Anschlussstutzen 4, 5 vorgesehen sind, für die Einbindung des Sammlers 1 in den Kreislauf einer Klimaanlage. Durch den Behälter 3 erstreckt sich ein mit dem zweiten Anschlussstutzen 5 verbundenes Leitrohr 6, das durch den Bodenbereich 7 des Behälters 3 verläuft und im oberen Bereich 8 des Behälters 3 offen endet.

Der durch den Bodenbereich 7 des Behälters 3 verlaufende Teil des Leitrohres 6 hat mindestens eine Ansaugöffnung 9 für Öl, das sich in diesem Behälterbereich 7 unterhalb der flüssigen Phase des Mediums der Klimaanlage absetzt. hat, so dass es in das durch die Klimaanlage zirkulierende Arbeitsmedium zurückgelangt

Für die Abscheidung der flüssigen Phase aus dem durch den Anschlussstutzen 4 zuströmenden Medium ist am oberen Bereich 8 des Behälters 3 eine zyklonartige Trenneinrichtung 10 vorgesehen. Diese hat eine Zyklonkammer 11, in die der Anschlussstutzen 4 tangential einmündet, so dass das Medium entlang der Innenfläche 12 der Zyklonkammer 11 zirkuliert und die durch Zentrifugalkraft sich abscheidende flüssige Phase im unteren Teil der Zyklonkammer 11 ansammelt, bevor es entlang der Innenfläche 13 eines zentralen, einen Überlauf 14 bildenden Abflussstutzens 15 zum Innenraum des Behälters 3, zusammen mit einem geringen Anteil an Öl abfliesst. Auch die gasförmige Phase des Mediums gelangt aus der Zyklonkammer 11 in den Abflussstutzen 15 und strömt von diesem in das mit geringem Abstand 16 angrenzende, zentrale Leitrohr 6. Der genannte Abstand 16 ermöglicht das Abfliessen der flüssigen Phase aus der Zyklonkammer 11 entlang der Behälterwand 17 in den Behälter 3 hinein, von der in gleicher Richtung zentral in das Leitrohr 6 abströmenden gasförmigen Phase weg.

Die gleichachsig vor dem Abflussstutzen 15 in geringem Abstand 16 endende Anordnung der Mündung 18 des Leitrohres und der beschriebene konstruktive Aufbau der zyklonartigen Trenneinrichtung 10 gewährleisten, dass auch bei Durchströmung des Sammlers 1 in umgekehrter Richtung, d.h. in Richtung vom zweiten Anschlussstutzen 5 zum ersten Anschlussstutzen 4, ein Austrag von flüssiger Phase 2 und von Öl aus dem Sammler 1 erfolgt. Dabei wird die flüssige Phase 2 und/oder Öl, aufgrund des bei der Durchströmung durch das Leitrohr 6 entstehenden Unterdrucks, durch das Loch 9 angesaugt und in die zyklonartige Trenneinrichtung 10 eingeführt. Dort trifft es auf die als Prallfläche wirkende, obere Wand 19 der Zyklonkammer 11 und wird von dort aus gegen ihre periphere Fläche 12 gedrückt, um von dieser über den tangentialen Anschlussstutzen 4 in den Kreislauf der Klimaanlage abzuströmen.

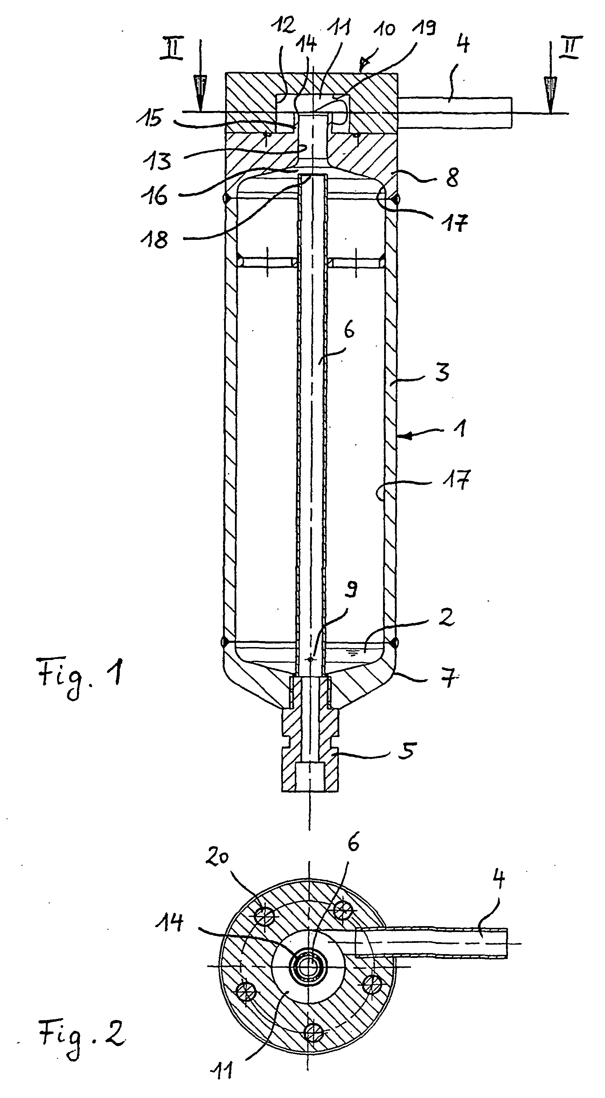

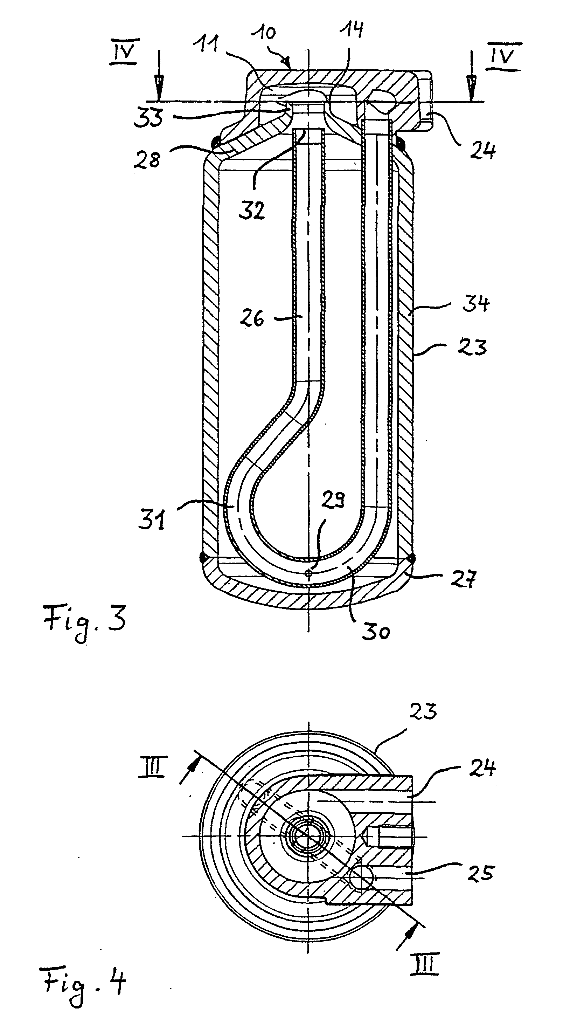

Die Ausführungsbeispiele der Fig. 1 und 2 einerseits und der Fig.3 und 4 bzw. 5 und 6 andererseits unterscheiden sich, abgesehen von unterschiedlicher Art der herstellungsgemäss unterschiedlichen Verbindung der zyklonartigen Trenneinrichtung 10 mit dem Behälter 3, im wesentlichen durch die Anordnung der Anschlussstutzen 4, 5 einerseits am oberen und unteren Bereich 7,8 des Behälters 3 und andererseits gemeinsam am oberen Bereich 8 des Behälters.

Die Anordnung beider Anschlussstutzen 24,25 am oberen Bereich 28 des Behälters 23 bedingt eine andere Form des Leitrohres 26, um einen mindestens eine Ansaugsaugöffnung 29 aufweisenden Teil 30 desselben durch den unteren Bereich 27des Behälters 23 zu führen. Hierzu hat das Leitrohr 26 eine haarnadelförmige Umlenkung 31, um es nach oben mit seiner Mündung 32 in geringem Abstand von dem Abflussstutzen 33 weiter zu führen. Folglich ist auch bei solcher Anordnung der Anschlussstutzen 24, 25 die an Hand des Ausführungsbeispieles nach Fig. 1 beschriebene Funktionsweise gewährleistet.

Beim Ausführungsbeispiel nach Fig.3 ist der Abflussstutzen 33 im Tiefziehverfahren flaschenhalsförmig aus der Wand 34 des Behälters 23 ausgeformt und die zyklonartige Trennvorrichtung ist kappenförmig auf den gewölbten oberen Bereich 28 des Behälters 23 aufgeschweisst. Im Unterschied hierzu ist beim Ausführungsbeispiel nach Fig. 1 der obere, gewölbte Bereich 8 des Behälters 3 mit dem Abflussstutzen 15 an einen zylindrischen Teil der Wand des Behälters 3 angeschweisst und die zyklonartige Trennvorrichtung 10 ist durch Schraubbolzen 20 am oberen Bereich 8 des Behälters 3 flanschartig befestigt.

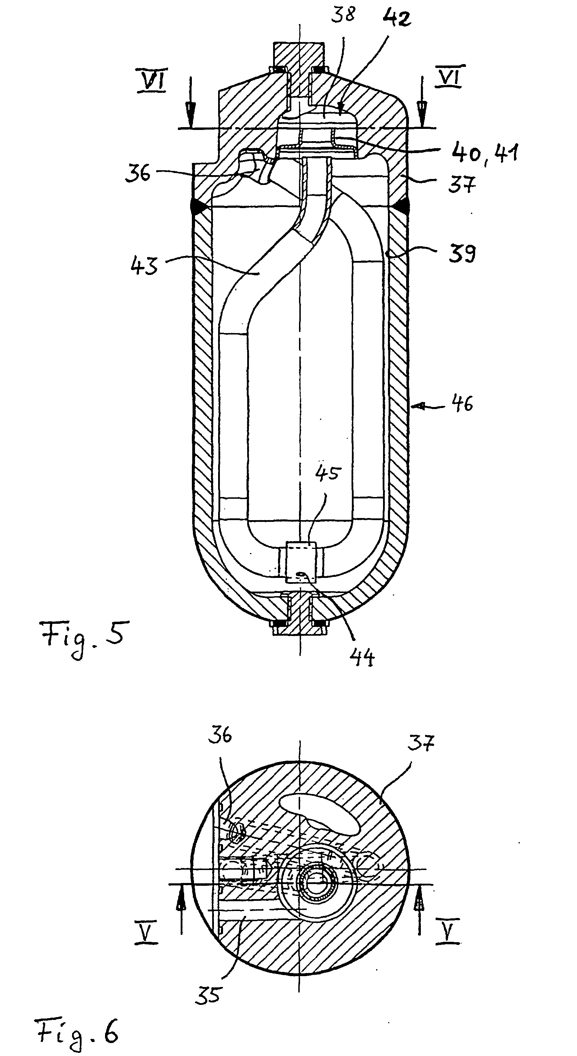

Das hinsichtlich der Herstellung des Sammlers besonders vorteilhafte Ausführungsbeispiel nach Fig.5 und 6 unterscheidet sich von demjenigen nach Fig.3 und 4 im wesentlichen dadurch, dass der die Anschlussstutzen 35 und 36 aufweisende obere Bereich des Sammlers einschliesslich der Zyklonkammer 38 als glockenförmiges Guss- oder Schmiedeteil 37 ausgeführt ist, das mit der zylindrischen Wand 39 beispielsweise durch Schweissen verbunden ist. Der den Abflussstutzen 40 bildende Innenteil der zyklonartigen Trenneinrichtung 42 ist als tiefgezogenes Blechteil 41 in das glockenförmige Guss- oder Schmiedeteil 37 eingesetzt und befestigt.

Um den mit dem Leitrohr 43 direkt verbundenen Anschlussstutzen 36, ohne rechtwinkelige Umlenkung entsprechend dem Ausführungsbeispiel nach Fig. 3, neben dem anderen Anschlussstutzen 35 seitlich aus dem Sammler herausführen zu können, hat das Leitrohr 43 einen schlaufenförmigen Verlauf, mit einer Überkreuzung im oberen Bereich 37 des Sammlers.

Zur Abfiltrierung von Verunreinigungen ist der das Loch 44 aufweisende Teil des Leitrohres 43 mit einem hülsenartigen Filterteil 45 versehen, das im unteren Bereich um das Leitrohr 43 herumgelegt ist. Das Loch 44 ist im Hinblick auf eine gute Zugänglichkeit an der Unterseite des Leitrohres angeordnet. Zur Zurückhaltung von Feuchtigkeit, kann innerhalb des Sammlers in nicht dargestellter Weise eine absorbierende Trockensubstanz angeordnet sein.

## Patentansprüche

1. Sammler für die flüssige Phase des Arbeitsmediums einer Klimaanlage, mit
- einem ersten für die Einbindung in den Kreislauf der Klimaanlage vorgesehenen Anschlussstutzen (4, 24),
- einem zweiten Anschlussstutzen (5, 25), und mit
- einem an den zweiten Anschlussstutzen (5, 25) angeschlossenen Leitrohr (6, 26), das derart durch den Innenraum des Behälters (3, 23) geführt ist, dass ein Teil des Leitrohres (6, 26) durch einen unteren Bodenbereich (7, 27) des Behälters (3, 23) verläuft und sich ein offenes Ende (18, 32) in einem oberen Bereich (8, 28) des Behälters (3, 23) befindet, wobei
- der durch den Bodenbereich (7, 27) verlaufende Teil des Leitrohres (6, 26) mindestens eine Öffnung (9) hat, zur Rückführung von gesammeltem Öl und flüssiger Phase des Arbeitsmediums in das durch die Klimaanlage zirkulierende Arbeitsmedium,
**dadurch gekennzeichnet, dass**
- zur Abscheidung der flüssigen Phase eine Trenneinrichtung (10) mit einer Zyklonkammer (11) und mit einem einen Überlauf (14) bildenden Abflussstutzen (15, 33) vorgesehen ist, in die der erste Anschlussstutzen (4, 24) tangential mündet, wobei das offene Ende (18, 32) des Leitrohres (6, 26) im oberen Bereich (8, 28) des Behälters (3, 23) mit geringem Abstand zum Abflussstutzen (15, 33) endet.

2. Sammler nach Anspruch 1, **dadurch gekennzeichnet, dass** die zyklonartige Trenneinrichtung (10) zentrisch am oberen Ende eines zylindrischen Behälters (3, 23) angeordnet ist und die Innenwand (17) des Behälters nach oben flaschenhalsförmig den Abflussstutzen (15, 33) bildet.

3. Sammler nach Anspruch 1 oder 2, **dadurch gekennzeichnet, dass** die beiden Anschlussstutzen (4, 5) am oberen und unteren Ende des Behälters (3) vorgesehen sind und das durch einen Teil des Behälters (3) des Sammlers (1) geführte Leitrohr (6) zentral und ungekrümmt in Richtung zu der Trenneinrichtung (10) zur Abscheidung der flüssigen Phase verläuft.

4. Sammler nach Anspruch 1, **dadurch gekennzeichnet, dass** beide Anschlussstutzen (24, 25) kopfseitig am Behälter (23) vorgesehen sind, so dass das Leitrohr (26) am Behälter (23) kopfseitig beginnend, durch den Behälter (23) geführt ist, wobei es im Bodenbereich (27) eine Umlenkung (31) aufweist, an der die Öffnung (9) zur Rückführung von flüssiger Phase und gesammeltem Öl in das Arbeitsmedium vorgesehen ist.

5. Sammler nach einem der Ansprüche 1 bis 4, **dadurch gekennzeichnet, dass** das offene Ende (18, 32) des Leitrohres (6, 26) mit einem Abstand (16) vor dem Abflussstutzen (15, 33) endet, der dem halben Durchmesser des Leitrohres (6, 26) entspricht.

6. Sammler nach Anspruch 5, **dadurch gekennzeichnet, dass** das Leitrohr (43) einen schlaufenförmigen Verlauf hat, mit einer Überkreuzung im oberen Bereich (37) des Sammlers.

7. Sammler nach Anspruch 4 oder 6, **dadurch gekennzeichnet, dass** der die Zyklonkammer (38) aufweisende obere Bereich (37) des Sammlers als glockenförmiges Guss- oder Schmiedeteil (37) ausgeführt ist, das mit einer den Behälter (46) des Sammlers bildenden zylindrischen Wand (39) verbunden ist.

8. Sammler nach Anspruch 7, **dadurch gekennzeichnet, dass** der den Abflussstutzen (40) bildende Innenteil der zyklonartigen Trenneinrichtung (42) als tiefgezogenes Blechteil (41) in das glockenförmige Guss- oder Schmiedeteil (37) eingesetzt und befestigt ist.

## Claims

1. Collector for the liquid phase of the working medium of an air-conditioning unit, with:
- a first connection tube (4, 24) provided for connection to the circuit of the air-conditioning unit,
- a second connection tube (5, 25), and with
- a pipe (6, 26) connected to the said second connection tube (5, 25), which passes through the inside space of a container (3, 23) in such manner that part of the said pipe (2, 26) passes through a lower, bottom area (7, 27) of the container (3, 23) and has an open end (18, 32) in an upper area (8, 28) of the container (3, 23), such that
- the part of the pipe (6, 26) passing through the bottom area (7, 27) of the container is provided with at least one opening (9) for the return of collected oil and liquid phase of the working medium back into the working medium circulating through the air-conditioning unit,
**characterised in that**
- to precipitate the liquid phase, a separator (10) with a cyclone chamber (11) and a outlet pipe (15, 33) that forms an overflow weir (14) are provided, into which the first connection tube (4, 24) opens tangentially, such that the open end (18, 32) of the pipe (6, 26) in the upper area (8, 28) of the container (3, 23) ends a small distance away from the outlet pipe (15, 33).

2. Collector according to Claim 1, **characterised in that** the cyclone-like separator (10) is arranged centrally at the upper end of a cylindrical container (3, 23) and the inner wall of the said container narrows upwards in a bottleneck shape to form the outlet pipe (15, 33).

3. Collector according to Claims 1 or 2, **characterised in that** the two connection tubes (4, 5) are provided at the top and bottom ends of the container (3) and the pipe (6) passing through part of the container (3) runs centrally and with no bends towards the separator (10) for precipitating the liquid phase.

4. Collector according to Claim 1, **characterised in that** both of the connection tubes (4, 5) are at the top of the container (23), so that the pipe (26) begins at the top of the container (23), passes down through it, and in its bottom area describes a bend (31) in which the opening (9) for returning liquid phase and collected oil back into the working medium is provided.

5. Collector according to any of Claims 1 to 4, **characterised in that** the open end (18, 32) of the pipe (6, 26) ends a distance (16) away from the outlet pipe (15, 33) that corresponds to half the diameter of the pipe (6, 26).

6. Collector according to Claims 4 or 6, **characterised in that** the pipe (43) has a looped shape with a cross-over in the upper area (37) of the collector.

7. Collector according to Claim 7, **characterised in that** the upper part (37) of the collector containing the cyclone chamber (38) is made as a bell-shaped casting or forged component (37), which is joined to a cylindrical wall (39) forming the container (46) of the collector.

8. Collector according to Claim 7, **characterised in that** the inside portion of the cyclone-like separator (42) that forms the outlet pipe (40) is a deep-drawn sheet component (41) inserted in and fixed to the bell-shaped casting or forged component (37).

## Revendications

1. Collecteur pour la phase liquide d'un milieu ou agent de travail d'une installation de climatisation, comprenant,
- un premier embout de raccordement (4, 24) prévu pour l'intégration dans le circuit de l'installation de climatisation,
- un second embout de raccordement (5, 25), et
- un tube de guidage (6, 26) raccordé au second embout de raccordement (5, 25), qui mène à travers la chambre intérieure du récipient (3, 23) de façon telle, qu'une partie du tube de guidage (6, 26) s'étende à travers une zone de fond inférieure (7, 27) du récipient (3, 23), et qu'une extrémité ouverte (18, 32) se trouve dans une zone supérieure (8, 28) du récipient (3, 23),
- la partie du tube de guidage (6, 26), qui s'étend à travers la zone de fond (7, 27) possédant au moins une ouverture (9), pour le recyclage dans le milieu de travail circulant à travers l'installation de climatisation, d'huile collectée et de phase liquide du milieu de travail,
**caractérisé en ce que**
- pour séparer la phase liquide, il est prévu un dispositif séparateur (10) avec une chambre de cyclone (11) et avec un embout d'écoulement (15, 33) formant un trop plein (14), le premier embout de raccordement (4, 24) débouchant tangentiellement dans ledit dispositif séparateur, et l'extrémité ouverte (18, 32) du tube de guidage (6, 26) se terminant dans la zone supérieure (8, 28) du récipient (3, 23), à faible distance de l'embout d'écoulement (15, 33).

2. Collecteur selon la revendication 1, **caractérisé en ce que** le dispositif séparateur (10) du type à cyclone est agencé de manière centrale à l'extrémité supérieure d'un récipient cylindrique (3, 23), et la paroi intérieure (17) du récipient réalise vers le haut, en forme de goulot de bouteille, l'embout d'écoulement (15, 33).

3. Collecteur selon la revendication 1 ou 2, **caractérisé en ce que** les deux embouts de raccordement (4, 5) sont prévus à l'extrémité supérieure et inférieure du récipient (3), et le tube de guidage (6) menant à travers une partie du récipient (3) du collecteur (1) s'étend de manière centrale et non courbée en direction du dispositif séparateur (10) pour la séparation de la phase liquide.

4. Collecteur selon la revendication 1, **caractérisé en ce que** les deux embouts de raccordement (24, 25) sont prévus sur le côté de tête ou le dessus du récipient (23), de sorte que le tube de guidage (26) mène à travers le récipient (23) en débutant par le côté de tête, et présente dans la zone du fond (27), une déviation ou un renvoi (31) au niveau duquel est prévue l'ouverture (29) pour le recyclage dans le milieu de travail, de phase liquide et d'huile collectée.

5. Collecteur selon l'une des revendications 1 à 4, **caractérisé en ce que** l'extrémité ouverte (18, 32) du tube de guidage (6, 26) se termine devant l'embout d'écoulement (15, 33), à une distance (16) qui correspond à la moitié du diamètre du tube de guidage (6, 26).

6. Collecteur selon la revendication 5, **caractérisé en ce que** le tube de guidage (43) présente un tracé en forme de boucle avec un croisement à chevauchement dans la zone supérieure (37) du collecteur.

7. Collecteur selon la revendication 4 ou 6, **caractérisé en ce que** la zone supérieure (37) du collecteur, qui présente la chambre de cyclone (38), est réalisée sous forme de pièce moulée ou forgée (37) en forme de cloche, qui est reliée à une paroi cylindrique (39) formant le récipient (46) du collecteur.

8. Collecteur selon la revendication 7, **caractérisé en ce que** la partie intérieure du dispositif séparateur (42) formant l'embout d'écoulement (40), est insérée et fixée, sous forme de pièce en tôle emboutie (41), dans la pièce moulée ou forgée (37) en forme de cloche
